# EUROPEAN PATENT APPLICATION

(11) **EP 1 430 785 A2**
(43) Date of publication of application: **23.06.2004**
(21) Application number: 03026387.5
(22) Date of filing: 18.11.2003
(51) Int. Cl.: A23G 9/00, A23G 9/04

(54) **Ice-cream yoghurt and method for its preparation**

(30) Priority: 18.11.2002 IT mi20022439
(71) Applicant: Yogurtal S.p.A., 20149 Milano (IT)
(72) Inventor: Bray, Franco, 20147 Milano MI (IT)
(74) Representative: Cattaneo, Elisabetta

(57) **Abstract**

A frozen and expanded ice-cream yoghurt comprises yoghurt, a sweetening agent, milk proteins, cream and an amount of live microorganisms in the range of 10⁶ and 10⁹ cfu/g. It can also comprise a vegetable fiber in the range of 3% to 7% by weight. A method for the production of the yoghurt is also described.

## Description

This invention relates to a new expanded ice-cream including a high quantity of live microorganisms that can consequently be defined as yoghurt, or rather ice-cream yoghurt.

Furthermore, the invention refers to a process for producing said ice-cream yoghurt.

The preparation of industrial ice-cream is generally carried out many months prior to consumption, with the use of raw materials such use as rehydrated powdered milk, sugar, fats, concentrated fruits juice and additives such as colourants, emulsifiers, stabilizers and aromas.

Some of the additives most commonly used by the foodstuff industry for the production of ice-creams are: propylene glycol alginate (E 405), carob-bean flour (E 410), guar gum (E 412), fatty acid mono- and diglycerides (E 471).

Yoghurt ice-creams produced with the simple addition of yoghurt during the ice-cream production process are known in the art since they offer the advantage of being able to be produced without making changes to traditional common ice-cream production techniques.

Although the yoghurt ice-cream obtained with the traditional production techniques of common ice-creams is soft and creamy, such ice-cream cannot be defined as yoghurt or rather ice-cream yoghurt.

As a matter of fact, yoghurt ice-cream obtained in this way contains an exiguous number of live lactobacilli, since the latter are for the most part deactivated during the heat pasteurization treatment to which the ice-cream has been subjected.

The beneficial effects on human health of certain microorganisms, commonly known as "probiotics", are known.

In order for a product to be defined as probiotic it is necessary for the bacteria (microorganisms) to remain alive during the manufacturing and conservation process, or until the consumption of the food containing said bacteria.

Attempts have been made to produce ice-cream yoghurt by means of adding fermented milk, prior to the freezing step, thus avoiding the heat treatment.

However, this method implied certain drawbacks and disadvantages.

In fact, the standard freezing process provides that the liquid product made up of fermented milk and other ingredients is introduced into a cylinder placed in a freezer and subjected to stirring by side scrapers, operated by a rotor, located in said cylinder. The scrapers drag the liquid that is initially mixed in this way. As the first ice crystals form, the ice-cream paste is moved away from the internal surface of said cylinder. During this freezing step a considerable decline in bacteria vitality takes place due to the mechanical stress to which the bacteria are subjected.

In order to obtain a light and soft ice-cream it is also known that it is necessary to introduce air during the freezing step. In this way a volume increase (overrun), determined by air incorporated during the freezing step, in the ice-cream mass and therefore an ice-cream, being defined as expanded, are obtained. The overrun is expressed in terms of percentage of final volume with respect to the initial volume without aeration. An ice-cream with a low overrun has a compact and too solid structure, consequently it is richer in caloric terms and relatively more expensive, in comparison with an equivalent volume of ice-cream with a high volume increase (overrun).

In the case of ice-cream containing yoghurt, the incorporation of air produces substantial oxidation, particularly of the bacterium *Lactobacillus bulgaricus,* with the consequent appreciable reduction in living microorganisms.

Moreover, it is known that the basic condition to guarantee the preservation of ice-creams, and also of all deepfrozen foodstuffs, is the maintenance of the cold chain, namely the continuity of the cold from production to consumption. In each link of this chain (point of production, refrigeration cells, transport means, sale counters) a temperature not exceeding -18°C should be guaranteed. However, during transportation and distribution for sale to the consumer it is possible that the ice-cream could be subjected to undesired thermic cycles, particularly to "thermal shock", due to the even temporary permanence of the product in an environment with a temperature higher than the allowed maximum. Failing to observe the temperature conditions, with possible processes of even partial defrosting and refreezing, can be macroscopically pointed out by the presence of frost or ice on the exterior of the product.

In order to contrast this kind of phenomenon, it is generally preferred to add stabilizers, artificial thickeners and emulsifiers to the ice-cream composition so as to improve the stability of the ice-cream against the aforementioned thermic shock and to simultaneously optimize the physical structure of the ice-cream itself.

A product obtained with the techniques known in the prior art, even if it contains yoghurt among its ingredients, cannot be defined in itself as yoghurt in the strictest meaning, since the live lactobactilli at the consumption are appreciably lower than the minimum limit of 10⁶ cfu/g determined by the regulations currently in force.

The object of the present invention is to produce an expanded ice-cream yoghurt that contains a high amount of live microorganisms at the consumption and to simultaneously supply an ice-cream yoghurt that is free of the common additives used in ice-cream production, but is nevertheless both soft and creamy.

This is achieved by means of an ice-cream yoghurt with characteristics according to claim 1, as well as by a process for producing the ice-cream yoghurt in accordance with claim 12.

The dependent claims outline particularly advantageous embodiments for the ice-cream yoghurt according to the invention, as well as its production method.

Other characteristics and advantages of the invention will become evident from the following description, supplied as a non-limitative example.

All the amounts being expressed below as a percentage % are by weight with respect to the total weight of the finished product unless otherwise indicated.

Ice-cream yoghurt according to the present invention comprises yoghurt, a sweetening agent, milk proteins and cream.

The yoghurt as an ingredient is produced from milk, preferably whole milk, and microorganisms able of fermenting the milk lactose by means of production techniques which are widely known to a skilled person in the art and hence are not described in details in the following.

The microorganisms which may be used to carry out the fermentation can be selected, for example, from *Lactobacillus reuteri, Lactobacillus acidophilus, Bifidobacteri,* preferably *Lactobacillus bulgaricus* and *Streptococcus thermophilus.*

Yoghurt containing microorganisms can be a ready-to-use form or can be prepared when used so as to have the characteristics required for the implementation of the invention.

Preferably, said live microorganisms are generated by a starter which is able to produce, during fermentation, exopolysaccharides (EPS). This allows greater viscosity, structural stability and inhibition of the water separation (syneresis) in the case of temperature fluctuations in the finished product.

Preferably, the ice-cream yoghurt of the present invention contains a larger amount of *Lactobacillus bulgaricus* and *Streptococcus thermophilus* with respect to the other microorganisms and the presence of exopolysaccharides. Furthermore, it is preferable that there is an improved cryogenic resistance of the *Lactobacillus bulgaricus* and for this end all the known methods, including for example, microencapsulation, genetic selection, natural selection, addition of cryoprotective agents and selection of the adaptation temperature below the growth optimal value during prefermentation step can be used.

The sweetening agent can consist of one or more kinds of sweeteners such as, for example, glucose, fructose, saccharose, lactose, invert sugars and the like or sweeteners of the intensive type, such as aspartame, acesulfame, saccharin etc.

The amount of sweetening agent can be selected on the basis of the desired taste characteristics of the ice-cream yoghurt, for example such an amount can be in the range of 5% to 16%, preferably 6% to 14%.

The milk proteins can be derived from any milk source, for example skimmed or whole milk, condensed milk, powdered milk, proteins separated from the whey, caseinates or the like. Milk protein substitutes such as soybean proteins and the like can also be used.

Preferably, the ice-cream yoghurt is enriched with isolated whey proteins. This provides the ice-cream yoghurt with a greater viscosity and improves the structure. Furthermore, the addition of these proteins substantially increases the stability of the water present in the final product, giving body to the ice-cream yoghurt and reducing the cold feeling on the palate on consumption of the final product. In such a way the latter turns out to be similar to the ice-cream yoghurt obtainable by using artificial thickeners and stabilizers. The milk proteins are present in the ice-cream yoghurt in an amount not lower than 3% in addition to those proteins provided by the milk itself.

The cream obtained by means of a butter making process of the milk according to known methods is present in an amount ranging from 5% to 10%.

Advantageously, ice-cream yoghurt comprises an amount of vegetable fiber in the range of 3% to 7% by weight.

For this purpose the vegetable fiber consists in one or more vegetable oligosaccharides, selected from those with a recognized probiotic functionality, for example lactulose, fructoligosaccharides (FOS), resistant starch, inulin and others.

The amounts by weight in the final product of the described above ingredients can, for example, be the following:

| | |
|---|---|
| whole yoghurt | 73-77% |
| sugar | 12-14% |
| fructose | 2-4% |
| cream | 5-6% |
| vegetable fiber | 3-4% |
| milk protein | 3-4% |

Ice-cream yoghurt so obtained has an amount of live microorganisms in the range of 10⁶ to 10⁹ cfu/g.

Advantageously, ice-cream yoghurt according to the invention allows a guaranteed minimum amount of live microorganisms of 10⁶ cfu/g to be present, even after six months storage at a typical preservation temperature for ice-creams, for example, not exceeding approximately -18°C.

Ice-cream yoghurt can be produced using a method according to the present invention, that allows the ice-cream yoghurt to have the aforementioned guaranteed minimum amount of live microorganisms of 10⁶ cfu/g at the consumption. Consequently, the invention also relates to a process as indicated in claim 12.

A mixture comprising a sweetening agent, milk proteins, cream and vegetable fiber in the amounts described above in the example and an amount of yoghurt, being equal to at least 15% and sufficient to dissolve the mixture, is formed.

The mixture is subjected to pasteurization at a temperature of about 82°C for a period of about thirty minutes, preferably for a few minutes. Subsequently, the mixture is subjected to homogenization at a pressure in the range of about 34 to 100 bar, being the homogenization facultatively carried out in two subsequent stages. The mixture can be pasteurized and homogenized according to any method known in the art.

The mixture so obtained is subjected to maturation, namely keeping in a refrigerated condition under stirring for approximately 2 - 24 hours, preferably for 6 - 12 hours, at a temperature of approximately 4°C.

On completion of the maturation step, yoghurt fermented milk is added to the mixture until an amount of yoghurt in the final ice-cream of at least 70% is reached.

It is to be noted that the addition of yoghurt in this step avoids subjecting the live microorganisms to pasteurization, which the consequent substantial decrease of the latter.

Following the addition of the yoghurt the subsequent freezing step is carried out. Advantageously, in order to avoid the alteration of the liveability of bacteria in the freezing step, the still liquid mixture in the maturation container can be kept in a completely airless environment.

Freezing occurs at a temperature in the range of about -3°C to -7°C, preferably in the range of about -4°C to -6°C, in order to limit crystal formation as far as possible in this freezing step and to assist the microbiological stability of the ice-cream yoghurt.

Advantageously, the mixture freezing process is carried out during the simultaneous injection of an inert gas which acts so as to increase the volume of the ice-cream mass. Inert gas is intended as being a gas without oxygen and usable in foodstuffs, such as, for example, CO₂ or nitrogen, used separately or in a mixture, in order to protect the lactic bacteria which are sensitive to oxygen.

The incorporation of the inert gas into the mixture is extended until a volume increase (overrun) in the range of about 30 to 90%, preferably in the range of about 40 to 60% is achieved.

During the freezing step and injection of the inert gas, the mixture is simultaneously subjected to mechanical stirring.

The freezing, injection and stirring treatments allow the ice-cream yoghurt to expand.

The aforementioned expansion can, for example, be obtained by pouring the mixture into the cylinder of a freezer with side scrapers and subjecting said mixture to rotation and shaking.

The scrapers stir the mixture at a rotation speed of about 200-500 revolutions per minute, preferably of about 300-400 revolutions per minute, reducing drastically the biological damage to the microorganisms due to mechanical stress. As the first ice crystals form, the latter are scraped away from the surface of the cylinder by the side scrapers.

Following the expansion, or rather at the mixture freezing step that takes place during the injection of inert gas and the simultaneous stirring of the mixture, the yoghurt production process is completed according to the present invention with the mixture hardening step at a low temperature.

In particular, during the hardening step the yoghurt freezing process is completed, without causing a significant decrease of the present live microorganisms.

In practice, it is has been shown that the ice-cream yoghurt and the method for its production according to the present invention, achieve the proposed objects, so allowing an expanded ice-cream yoghurt with a high microorganism amount and with significant advantages with respect to the ice-cream yoghurts of the prior art to be obtained.

As a matter of fact, ice-cream yoghurt has a high amount of live microorganisms even after a six month period, which is typical of ice-cream storage, thus allowing the product to be titled as yoghurt because it contains the minimum amounts provided by the law on this matter.

Moreover, ice-cream yoghurt and the method for its production according to the present invention allow the production of an ice-cream yoghurt free of additives such as emulsifiers, artificial thickeners and stabilizers and at the same time allow a soft and creamy product to be obtained.

Moreover, the possibility of implementing the described method with industrial plants already existing in the ice-cream industry is not negligible, with the proviso that the single process steps are modified and completed with the previously described interventions.

The invention has been described with reference to a preferred embodiment thereof.

Obviously, the skilled person in the art, in order to satisfy contingent and specific needs, will be able to implement numerous changes, adaptations and substitutions with other functionally equivalent elements, without however departing from the scope of the following claims.

## Claims

1. A frozen and expanded ice-cream yoghurt comprising yoghurt, a sweetening agent, milk proteins, cream, **characterised in that** said ice-cream yoghurt comprises an amount of live microorganisms higher than 10⁶ cfu/g.

2. Ice-cream yoghurt according to claim 1, **characterised in that** it comprises an amount of vegetable fiber in the range of 3% to 7% by weight.

3. Ice-cream yoghurt according to claim 2, wherein said vegetable fiber consists in at least one vegetable oligosaccharide having a recognized probiotic function.

4. Ice-cream yoghurt according to any one of the preceding claims, wherein the amount of live microorganisms is in the range of 10⁶ to 10⁹ cfu/g.

5. Ice-cream yoghurt according to any one of the preceding claims, wherein said live microorganisms comprise *Lactobacillus bulgaricus* and *Streptococcus thermophilus*.

6. Ice-cream yoghurt according to any one of the preceding claims, wherein the sweetening agent consists in one or more sweeteners selected from saccharose, fructose, glucose or an intensive type sweetener.

7. Ice-cream yoghurt according to any one of the preceding claims, wherein said live microorganisms are generated by a culture suitable for producing exopolysaccharides (EPS).

8. Ice-cream yoghurt according to any one of the preceding claims, wherein said milk proteins are present in an amount not lower than 3% by weight, in addition to those already present in the milk.

9. Ice-cream yoghurt according to any one of the preceding claims, wherein said sweetening agent is present in an amount in the range of 6% to 16%.

10. Ice-cream yoghurt according to any one of the preceding claims, wherein said cream is present in an amount in the range of 5% to 10% by weight.

11. Ice-cream yoghurt according to any one of the preceding claims, wherein said yoghurt is present in an amount of at least 70 % by weight.

12. A method for the preparation of an expanded ice-cream yoghurt provided with an amount of live microorganisms higher than 10⁶ cfu/g, comprising the steps of:
a) mixing a sweetening agent, milk proteins, cream and an amount of at least 15% by weight of yoghurt in order to form a homogenous mixture;
b) pasteurizing said mixture;
c) homogenizing said mixture;
d) maturing said mixture for a period of time and at a pre-established temperature;
e) on completion of the maturation step, adding yoghurt fermented milk to the mixture until an amount of yoghurt in the final ice-cream of at least 70% by weight is obtained;
f) freezing the mixture
g) simultaneously to said freezing step f) injecting inert gas until a volume increase in a range of 30% to 90% is reached.
h) hardening the mixture

13. Process according to claim 12, wherein in step a) fiber in an amount between 3 and 7% by weight is added.

14. Process according to claim 12 or 13 wherein the sweetening agent, the milk proteins and the cream are in an amount respectively of 6-16%, 3-5% and 5-10% by weight.

15. Process according to any one of claims 12 to 14, wherein the step d) of maturation takes place for a period from 2 to 24 hours at a temperature of about 4°C.

16. Process according to any one of claims 12 to 15 wherein the freezing step f) takes place at a temperature in the range of -3°C to -7°C.

17. Method according to claim 16, wherein said freezing step f) takes place at a temperature in the range of -4°C to -6°C.

18. Process according to any one of claims 12 to 17, wherein during said freezing step f), the mixture is stirred at a rotation speed in the range of 200 to 500 revolutions per minute.

19. Method according to claim 18, wherein the rotation speed is in the range of 300 to 400 revolutions per minute.

20. Method according to any one of the preceding claims, wherein the mixture in the maturation step d) is in a completely airless environment.

21. Method according to any one of claims 12 to 20, wherein said maturation step d) has a duration of 6 to 12 hours.

22. Method according to any of claims 12 to 21, wherein said injection step g) is carried out until a volume increase in the range of 40% to 60% is reached.
